Europäisches Patentamt

**European Patent Office**

Office européen des brevets

(19)

(11) Veröffentlichungsnummer: **0 296 491**
**B1**

(12) **EUROPÄISCHE PATENTSCHRIFT**

(45) Veröffentlichungstag der Patentschrift: **16.01.91**

(21) Anmeldenummer: **88109636.6**

(22) Anmeldetag: **16.06.88**

(51) Int. Cl.⁵: **C 08 L 33/06, C 08 K 5/25, C 08 J 3/07, C 09 J 133/04 // (C08L33/06, 33:06)**

(54) Lagerstabile wässrige Polymerdispersionen.

(30) Priorität: **24.06.87 DE 3720860**

(43) Veröffentlichungstag der Anmeldung:
**28.12.88 Patentblatt 88/52**

(45) Bekanntmachung des Hinweises auf die
Patenterteilung:
**16.01.91 Patentblatt 91/03**

(84) Benannte Vertragsstaaten:
**AT BE CH DE ES FR GB IT LI NL SE**

(56) Entgegenhaltungen:
**FR-A-2 301 578**
**US-A-4 210 565**

**PATENT ABSTRACTS OF JAPAN, Band 6, Nr. 63**
**(C-99)941r, 22. April 1982; & JP-A-57 3857**

(73) Patentinhaber: **BASF Aktiengesellschaft**
**Carl-Bosch-Strasse 38**
**D-6700 Ludwigshafen (DE)**

(72) Erfinder: **Auchter, Gerhard, Dr.**
**Gute Erde 13**
**D-6800 Mannheim 31 (DE)**
Erfinder: **Schwerzel, Thomas, Dr.**
**Budapester Strasse 51**
**D-6700 Ludwigshafen (DE)**
Erfinder: **Osterloh, Rolf, Dr.**
**Am Kapellenbusch**
**D-5042 Erftstadt (DE)**
Erfinder: **Neubert, Gerhard, Dr.**
**Panoramastrasse 11**
**D-6719 Battenberg (DE)**
Erfinder: **Pfoehler, Peter, Dr.**
**Franz-Stuetzel-Strasse 51**
**D-6720 Speyer (DE)**
Erfinder: **Druschke, Wolfgang, Dr.**
**Berliner Strasse 28**
**D-6716 Dirmstein (DE)**
Erfinder: **Jaeger, Helmut**
**Im Weinberg 4**
**D-6719 Bobenheim (DE)**

# EP 0 296 491 B1

**Beschreibung**

Die vorliegende Erfindung betrifft lagerstabile wäßrige Polymerdispersionen, erhältlich durch Dispergierung eines Gemisches zweier Copolymerisate, von denen mindestens eines eine copolymerisierbare Carbonylverbindung als Aufbaukomponente enthält, unter Mitverwendung von Polyhydraziden als Vernetzungsmittel, ein Verfahren zur Herstellung derartiger Dispersionen und ihre Verwendung als Haftkleber und als Klebemittel für Verbundfolien.

Bei wäßrigen Dispersionen die auf dem Klebstoffgebiet eingesetzt werden, handelt es sich gewöhnlich um Emulsionspolymerisate, bei deren Herstellung hydrophile Hilfsstoffsysteme (Emulgatoren und/oder Schutzkolloide) eingesetzt werden. Diese hydrophilen Hilfsstoffe verbleiben nach dem Trocknen der Dispersionen im Klebstoffilm und beeinträchtigen dessen Wasserbeständigkeit, die daher im allgemeinen nicht befriedigend ist. Insbesondere ist das Weißanlaufen der Klebstoffilme bei Kontakt mit Wasser für bestimmte Anwendungsgebiete, z.B. das Kleben transparenter Folien, sehr störend. Derartige Polymerdispersionen werden beispielsweise in der EP—3516 beschrieben.

Die DE—OS 35 36 261 beschreibt in wäßrigen Lösungen oder Dispersionen lagerstabile polymere Zusammensetzungen, die durch Umsetzung von polymeren organischen Verbindungen mit Carboxyl- und Carbonylgruppen mit Polyhydraziden in Gegenwart von Monoketonen und/oder Monoaldehyden erhältlich sind und die nach zumindest teilweiser Neutralisation der Carboxylgruppen in Wasser löslich bzw. dispergierbar sind. Die auf diese Weise hergestellten Dispersionen werden als Sekundärdispersionen bezeichnet. Um eine ausreichende Lagerstabilität zu erhalten, werden beträchtliche Mengen an flüchtigen Monoketonen und/oder Monoaldehyden benötigt, die beim Trocknen verdunsten. Dies ist aus geruchlichen und toxikologischen Gründen nicht erwünscht. Infolge des zur Herstellung dieser Zusammensetzungen erforderlichen relativ hohen Gehälts an Carboxylgruppen ist die Wasserbeständigkeit der daraus hergestellten Filme ebenfalls nicht optimal.

Die US—A 4,210,565 betrifft eine Lösung oder wäßrige Dispersion eines Copolymeren, das aus 0,25 bis 30 Gew.-% eines polymerisierbaren Aldehyds und weiteren copolymerisierbaren Monomeren aufgebaut ist, und welche ein Polyhydrazin oder Polyhydrazon als Vernetzungsmittel enthält.

Aufgabe der vorliegenden Erfindung ist es daher, lagerstabile wäßrige Polymerdispersionen bereitzustellen, die nur sehr geringe Mengen an organischen Lösemitteln, insbesondere keine Ketone oder Aldehyde, enthalten und die sehr wasserbeständige Filme mit guten Adhäsions- und Kohäsionseigenschaften ergeben.

Gegenstand der vorliegenden Erfindung sind lagerstabile wäßrige Polymerdispersionen, erhältlich durch Dispergierung eines Gemisches aus 15 bis 70 Gew.-% eines durch Lösungsmittelpolymerisation hergestellten Copolymerisates (A) aus

(I) 1,5 bis 15 Gew.-% copolymerisierbarer Verbindungen mit 3 bis 10 Kohlenstoffatomen, die eine Carboxyl- oder Carbonsäureanhydridgruppe enthalten,

(II) 65 bis 98,5 Gew.-% $C_1$- bis $C_{20}$-Alkylacrylate oder -methacrylate,

(III) 0 bis 20 Gew.-% Vinylaromaten,

(IV) 0 bis 20 Gew.-% copolymerisierbarer Carbonylverbindungen,

(V) 0 bis 10 Gew.-% weiterer, unter (I) bis (IV) nicht genannter copolymerisierbarer organischer Verbindungen und

30 bis 85 Gew.-% eines durch Lösungsmittelpolymerisation hergestellten Copolymerisates (B) aus

60 bis 100 Gew.-% der Monomeren (II) und 0 bis 40 Gew.-% eines oder mehrerer der Monomeren (III) bis (V)

mit der Maßgabe, daß die Copolymerisate (A) und (B) zusammen mehr als 65 Gew.-% solcher Alkyl-(meth)acrylate (II) als Aufbaukomponente enthalten, deren Homopolymerisate Glastemperaturen unter 0°C aufweisen und daß mindestens eines der Copolymerisate (A) und (B) die Monomeren (IV) als Aufbaukomponente enthält,

in Wasser unter Zusatz von Ammoniak und einem Polyhydrazid (C).

Gegenstand der vorliegenden Erfindung ist auch ein Verfahren zur Herstellung der wäßrigen Polymerdispersionen sowie deren Anwendung als Haftkleber und als Klebemittel für Verbundfolien.

Zu den Aufbaukomponenten der Copolymerisate (A) bzw. (B) ist folgendes auszuführen:

Als Komponente (I) kommen copolymerisierbare olefinisch ungesättigte, 3 bis 10 Kohlenstoffatome enthaltende organische Verbindungen mit mindestens einer Carboxyl- oder Carbonsäureanhydridgruppe in Frage, wie Acrylsäure, Methacrylsäure, Maleinsäure, Itaconsäure bzw. Anhydride oder Halbester der Dicarbonsäuren. Die Anhydridgruppen der Copolymerisate können vor dem Neutralisieren mit Ammoniak, beispielsweise durch Erwärmen mit 1 bis 8 Kohlenstoffatome enthaltenden Alkoholen oder Glykolethern in die entsprechenden Halbestergruppen übergeführt werden. Beispiele für solche Alkohole bzw. Glykolether sind Ethanol, Isopropanol, Butanol und Butylglykol. Bevorzugte Komponenten (I) sind Acrylsäure, Methacrylsäure und Itaconsäure. Komponente (I) ist im Copolymerisat (A) in Mengen von 1,5 bis 15, vorzugsweise 5 bis 12 Gew.-% einpolymerisiert.

Als Ester der Acrylsäure oder Methacrylsäure (II) mit 1 bis 20 Kohlenstoffatome enthaltenden geradkettigen oder verzweigten Monoalkanolen eignen sich z.B. Methylacrylat, Ethylacrylat, Isopropylacrylat, Methylmethacrylat, n-Butylacrylat, n-Butylmethacrylat, Isobutylacrylat, Isobutylmethacylat, tert.-Butyl-

# EP 0 296 491 B1

acrylat, 2-Ethylhexylacrylat, 2-Ethylhexylmethacrylat, Laurylacrylat sowie deren Gemische. Bevorzugt sind n-Butylacrylat und Methylmethacrylat.

Komponente (II) ist im Copolymerisat (A) zu 65 bis 98,5 Gew.-%, bevorzugt 80 bis 95 Gew.-%, enthalten.

Als Komponente (III) werden Vinylaromaten mit 8 bis 12 Kohlenstoffatomen wie Styrol, Methylstyrol, Vinyltoluole, tert.-Butylstyrol und Halogenstyrole eingesetzt. Bevorzugt ist Styrol. Komponente (III) kann im Copolymerisat (A) bis zu 20 Gew.-% mitverwendet werden. Für den Fall der Mitverwendung haben sich 5 bis 15 Gew.-% bewährt.

Geeignete copolymerisierbare carbonylgruppenhaltige Verbindungen (IV) sind z.B. α,β-monoolefinisch ungesättigte Aldehyde und/oder Ketone wie Acrolein, Methacrolein, Vinylalkylketone mit 1 bis 20 Kohlenstoffatomen im Alkylrest, Formylstyrol, (Meth)acryloxyalkanale und -alkanone, deren Herstellung z.B. in der DE—OS 27 22 097 beschrieben ist, N-Oxoalkyl(meth)acrylamide, wie sie u.a. in der US—PS 4 226 007, der DE—OS 20 61 213 oder der DE—OS 22 07 209 beschrieben sind, z.B. N-3-Oxobutylacrylamid und -methacrylamid, N-1,1-Dimethyl-3-oxobutyl(meth)acrylamid, Diaceton(meth)acrylamid sowie N-3-Oxo-1,1-dibutyl-2-propylhexylacrylamid, ferner Acetonyl- und Diaceton(meth)acrylat oder Acrylaminopivalinaldehyd oder Gemische dieser Comonomeren. Bevorzugt werden 3-Oxoalkyl(meth)acrylate und N-3-Oxoalkyl(meth)acrylamide.

Komponente (IV) kann im Copolymerisat (A) bis zu 20 Gew.-% enthalten sein. Im Fall der Mitverwendung ist eine Menge von 3 bis 10 Gew.-% bevorzugt.

Bei der Komponente (V) handelt es sich um weitere, unter (I) bis (IV) nicht genannte, copolymerisierbare olefinisch ungesättigte Verbindungen. Es sind dies beispielsweise Mono(meth)acrylate von Alkandiolen wie Hydroxyethyl- und Hydroxypropyl(meth)acrylat sowie Butandiolmono(meth)acrylat, (Meth)-acrylamid und/oder (Meth)acrylnitril. Diese Monomeren können, falls erforderlich, zur Einstellung spezieller Eigenschaften dienen. Als Komponente (V) können noch vorhanden sein:

Vinylether, Vinylester, Diester der Maleinsäure, Itaconsäure, Citraconsäure oder Mesaconsäure mit, gegebenenfalls Ether- oder Thioethergruppen enthaltenden, Monoalkoholen mit 1 bis 20 Kohlenstoffatomen. Weiterhin können als Komponente (V) Monoolefine mit 3 bis 20 Kohlenstoffatomen, wie Propen, Buten, Penten, Hexen, Isobuten und Diolefine wie Butadien und Isopren verwendet werden. Es ist bekannt, daß polare funktionelle Gruppen, wie sie in Komponente (V) enthalten sein können z.B. Hydroxy- oder Ethergruppen, Polymerdispersionen zusätzlich stabilisieren. Die erfindungsgemäßen Dispersionen benötigen jedoch eine solche zusätzliche Stabilisierung nicht. In Komponente (V) enthaltene polare Gruppen können jedoch die Wasserfestigkeit der aus den erfindungsgemäßen Dispersionen erhaltenen Filme ungünstig beeinflussen. In der bevorzugten Ausführungsform der Erfindung wird Komponente (V) daher nicht mitverwendet.

Das Copolymerisat (B) enthält die Aufbaukomponente (I) nicht. Die Komponente (II) ist im Copolymerisat (B) zu 60 bis 100 Gew.-%, bevorzugt 75 bis 98 Gew.-% enthalten, die übrigen Komponenten (III) bis (V) sind zu 0 bis 40, im Fall der Mitverwendung bevorzugt zu 2 bis 25 Gew.-% enthalten.

Das Gemisch der Copolymerisate besteht zu 15 bis 70 Gew.-% aus Copolymerisat (A) und 30 bis 85 Gew.-% Copolymerisat (B), bevorzugt 25 bis 45 Gew.-% (A) und 55 bis 75 Gew.-% (B). Damit die Polymerdispersionen nach der Verfilmung gute Klebeeigenschaften aufweisen, werden mehr als 65 Gew.-%, bezogen auf die Gesamtmenge der zur Herstellung der Copolymerisate (A) und (B) verwendeten Komponenten (I) bis (V), solcher Alkyl(meth)acrylate (II) verwendet, deren Homopolymerisate Glastemperaturen unter 0°C aufweisen. Die Glastemperaturen von Homopolymerisaten sind beispielsweise in J. Brandrup, E. H. Immergut "Polymer Handbook" Wiley-Interscience, 2. Ed., 1975, III—139 ff. angegeben.

Bei der Verwendung der erfindungsgemäßen Dispersionen als Klebstoff muß die Glastemperatur des Polymerisats und damit dessen Härte dem jeweiligen speziellen Anwendungsgebiet durch entsprechende Monomerauswahl angepaßt sein. Eine Dispersion, die als Haftkleber eingesetzt wird, sollte eine Glastemperatur von unter 0°C haben. Dem Fachmann ist dabei bekannt, daß bei Acrylat-Dispersionen mit Fallen der Glastemperatur das Anfaßvermögen zunimmt. Im allgemeinen ist gutes Anfaßvermögen mit einer Glastemperatur unter −45°C verbunden. Dispersionen mit einer Glastemperatur über −45°C haben bei Raumtemperatur ein deutlich geringeres Anfaßvermögen. Die erfindungsgemäßen Dispersionen haben überraschenderweise ein hohes Anfaßvermögen auch wenn die Glastemperatur bei −25°C liegt.

Weiterhin enthält entweder das Copolymerisat (A) oder (B) oder beide die Aufbaukomponente (IV), damit eine Vernetzung über die Polyhydrazide möglich ist.

Die Copolymerisate (A) und (B) der erfindungsgemäßen Dispersionen werden durch Polymerisation in organischer Lösung hergestellt. Das Verfahren der Lösungsmittelpolymerisation ist dem Fachmann grundsätzlich bekannt, so daß auf die für die jeweiligen Aufbaukomponenten geeigneten Bedingungen hier nicht näher eingegangen zu werden braucht. Die Polymerisation erfolgt zweckmäßigerweise in Gegenwart von 0,3 bis 5,0, vorzugsweise 0,5 bis 3,0 Gew.-%, bezogen auf die Summe der Monomeren, radikalbildender Initiatoren wie Azobiscarbonsäureamiden, Azobiscarbonsäurenitrilen oder Peroxiden im allgemeinen bei Temperaturen zwischen 50 und 150°C, vorzugsweise zwischen 80 und 130°C, gegebenenfalls in Gegenwart von Reglern wie Mercaptoethanol, tert.-Dodecylmercaptan oder Diisopropylxanthogendisulfid, die in Mengen von 0 bis 3 Gew.-%, bezogen auf die Summe der Monomeren, vorhanden sein können.

Als organische Lösemittel kommen grundsätzlich alle gebräuchlichen Lösemittel, die das erfindungsgemäße Copolymerisat lösen, in Betracht. Ein Gehalt an Lösemittel ist für die Stabilisierung und die

3

positiven Anwendungseigenschaften der erfindungsgemäßen Dispersionen nicht erforderlich und es ist daher aus Gründen des Umweltschutzes sinnvoll, den Gehalt an Lösemittel möglichst klein zu wählen. Zweckmäßigerweise werden Lösemittel verwendet, die sich aufgrund ihres Siedepunktes und/oder Azeotropbildung mit Wasser leicht aus den erfindungsgemäßen Dispersionen abdestillieren lassen. Besonders bevorzugt sind Butanol, Isobutanol, Propanol, Ethanol und Toluol.

Es ist an sich nicht von Bedeutung, ob zuerst die Komponente (A) und dann die Komponente (B) polymerisiert wird, oder ob umgekehrt vorgegangen wird. In einer bevorzugten Ausführungsform der Erfindung wird jedoch zunächst die Komponente (A) und anschließend die Komponente (B) polymerisiert. Die beiden Komponenten ergeben eine homogene Mischung. Die zuerst hergestellte Komponente wird weitestgehend, d.h. zu mehr als 95%, vorzugsweise 99% polymerisiert, bevor mit der Polymerisation der zweiten Komponente begonnen wird. Durch Restmonomere aus der ersten Komponente, insbesondere säuregruppenhaltige, könnte sich die Zusammensetzung der zweiten Komponente verändern, was zu einer Verschlechterung der anwendungstechnischen Eigenschaften führen könnte.

Dispersionen, die analog zu den erfindungsgemäßen aus zwei getrennt hergestellten und dann gemischten Copolymerisaten (A) und (B) hergestellt werden, weisen im allgemeinen ungünstigere anwendungstechnische Eigenschaften, wie geringere Stabilität und ungünstigeres Fließverhalten auf. Zudem würde das Mischen einen zusätzlichen Arbeitsgang erfordern.

Die Lösungen der Copolymerisate (A) und (B) werden entweder durch Zumischen von Ammoniak und Verdünnen mit Wasser in Dispersionen überführt, oder man rührt die auspolymerisierte Copolymerisatlösung langsam in eine wäßrige Ammoniaklösung ein und erhält dadurch eine Dispersion. Aus den so erhaltenen Dispersionen wird das organische Lösungsmittel, gegebenenfalls destillativ, auf eine Konzentration von <5 Gew.-% entfernt, wobei das Lösemittel zurückgewonnen werden kann. Der Neutralisationsgrad der erfindungsgemäßen Dispersionen beträgt 10 bis 150%, vorzugsweise 15 bis 100%, besonders bevorzugt 40 bis 70%. Der pH-Wert der Dispersionen kann demnach zwischen etwa 6, 8 und 10, vorzugsweise zwischen 7 und 9, betragen. Von dem als Neutralisationsmittel dienenden Ammoniak kann, zur Erzielung bestimmter Effekte, ein geringer Teil, zweckmäßig nicht mehr als 25 Mol.-%, vorzugsweise nicht mehr als 10 Mol.-% des für die Neutralisation erforderlichen Ammoniaks, durch organische Amine, insbesondere Triethylamin, ersetzt werden. Solche Zusätze können die Wasserfestigkeit der Dispersionsfilme beeinträchtigen. Der Polymerisatgehalt der erfindungsgemäßen Dispersionen wird zweckmäßigerweise so gewählt, daß sich eine für den Verarbeiter günstige Viskosität ergibt. Der Polymerisatgehalt beträgt deshalb 35 bis 60 Gew.-%, vorzugsweise 40 bis 55 Gew.-%.

Geeignete Polyhydrazide (C) sind z.B. Dihydrazide organischer Di- oder Oligocarbonsäuren. Als Beispiele seien genannt: Malonsäure-, Bernsteinsäure-, Glutarsäure-, Adipinsäure-, Pimelinsäure-, Korksäure-, Azelainsäure-, Sebacinsäure-, Undecandisäure-, Dodecandisäure-, Tridecandisäure-, Tetradecandisäure-, Pentadecandisäure-, Hexadecandisäure-, 2-Methyl-tetradecandisäure-dihydrazid, ferner Methyl-, Ethyl-, Propyl-, Butyl-, Hexyl-, Heptyl-, Octyl-, 2-Ethylhexyl-, Nonyl-, Decyl-, Undecyl- und Dodecylmalonsäuredihydrazid, Methyl-, Ethyl-, Propyl-, Butyl-, Hexyl-, Heptyl-, Octyl-bernsteinsäuredihydrazid, 2-Ethyl-3-propyl-bernstein- und -glutarsäuredihydrazid, Cyclohexandicarbonsäure- und Cyclohexylmethylmalonsäure-dihydrazid, Terephthalsäure-, Phenylbernsteinsäure-, Cinnamylmalonsäureund Benzylmalonsäuredihydrazid, Pentan-1.3.5-tricarbonsäuretrihydrazid, Hex-4-en-1.2.6-tricarbonsäuretrihydrazid, 3-Cyan-pentan-1.3.5-tricarbonsäuretrihydrazid, Dicyanfumarsäuredihydrazid, ferner die Di- bzw. Oligohydrazide von dimerisierten bzw. oligomerisierten ungesättigten Fettsäuren.

Bevorzugt ist Adipinsäuredihydrazid.

Das Polyhydrazid wird den erfindungsgemäßen Polymerdispersionen zweckmäßigerweise nach dem Abdestillieren des überschüssigen organischen Lösungsmittels in fester Form oder als wäßrige Lösung oder Aufschlämmung hinzugefügt und eingerührt.

Die erfindungsgemäßen Dispersionen sind überraschenderweise trotz der möglichen Reaktion zwischen Hydrazid- und Carbonylgruppen, die zur Vernetzung führt, lagerstabil, d.h. sie neigen auch bei längerer Lagerung nicht zur Zweiphasenbildung, noch verändern sich bei der Lagerung Viskosität, Verfilmungs- und Klebrigkeitsverhalten nennenswert.

Nach Auftrag auf ein Substrat und Auftrocknen ergeben sich jedoch bereits bei Raumtemperatur vernetzte Filme, die in Lösemitteln nicht mehr vollständig wieder aufgelöst werden können. Durch erhöhte Temperatur werden Trocknung und Vernetzung beschleunigt. Die aus den erfindungsgemäßen Dispersionen erhältlichen Filme sind bereits ohne Hydrazidzusatz stark klebrig. Für eine Anwendung als Kleber ist jedoch die Kohäsion völlig unzureichend. Die Kohäsion wird durch den Zusatz an Hydrazid stark erhöht und somit dem jeweiligen Anwendungszweck angepaßt. Die bevorzugte Menge des Hydrazidzusatzes liegt bei einem Äquivalenzverhältnis von 0,1 bis 0,5, vorzugsweise 0,2 bis 0,4, bezogen auf die eingesetzte Carbonylkomponente. Im allgemeinen sinkt mit steigendem Zusatz an Hydrazid, bezogen auf die Carbonylkomponente, die Klebrigkeit und das Anfaßvermögen, während die Kohäsion ansteigt.

Die Wasserfestigkeit der Dispersionsfilme nimmt mit steigendem Hydrazidanteil, bezogen auf die Carbonylkomponente, leicht ab, ist jedoch auch noch bei Äquivalenzverhältnis 1, bezogen auf die Carbonylkomponente, deutlich höher als die einer normalen Seifen- oder Schutzkolloiddispersion. Die Wasserfestigkeit wird durch Messung der Lichtdurchlässigkeitsabnahme eines auf glasklare Polyesterfolie beschichteten, 20 µm starken Dispersionsfilmes, der in Wasser gelagert wird, geprüft. Die erfindungsgemäßen Dispersionen zeigen nach 60 Minuten eine Abnahme von 2 bis 15%, Seifen- oder Schutzkolloiddispersionen haben eine Abnahme von mindestens 25%. Die Verarbeitung der Dispersionen kann mit den üblichen Auftragsaggregaten erfolgen, die Viskosität kann durch Verdicken mit handelsüblichen Verdickern oder Verdünnen mit Wasser an das jeweilige Auftragssystem angepaßt werden.

Beispiel 1 bis 6

In einem Reaktionsgefäß wurde Mischung 1 (s. Tabelle 1) zusammen mit 260 g Isobutanol vorgelegt und auf 105°C erwärmt. Dann wurde Mischung 2 zugegeben und 2,5 Stunden bei Rückflußtemperatur polymerisiert. Anschließend wurde Mischung 3 im Verlauf von 3 Stunden bei ca. 105°C zudosiert. Danach wurde noch 4 Stunden bei 105°C polymerisiert und dabei mit 200 g Isobutanol verdünnt. Nach Abkühlen auf 60°C wurden zunächst 35,4 g 25 gew.-%ige wäßrige Ammoniaklösung und dann 850 g Wasser eingerührt. Unter Vakuum wurde so lange ein Isobutanol-Wasser-Gemisch abdestilliert, bis praktisch kein Isobutanol mehr überging. Während der Destillation wurde eine der abdestillierten Flüssigkeitsmenge entsprechende Menge Wasser zugegeben. Nun wurde die in Tabelle 1 angegebene Menge Adipinsäuredihydrazid eingerührt und mit Wasser auf den angegebenen Feststoffgehalt verdünnt.

Tabelle 1

| | Bei-spiel 1 | Bei-spiel 2 | Bei-spiel 3 | Bei-spiel 4 | Bei-spiel 5 | Bei-spiel 6 |
|---|---|---|---|---|---|---|
| Mischung 1: | | | | | | |
| Methylmethacrylat (g) | 70 | 85 | 105 | 40 | 85 | 85 |
| n-Butylacrylat (g) | 320 | 402,5 | 480 | 447,5 | 402,5 | 402,5 |
| Acrylsäure (g) | 30 | 37,5 | 45 | 37,5 | 37,5 | 37,5 |
| | | | | | | |
| Mischung 2: | | | | | | |
| tert.-Butylperbenzoat (g) | 1,5 | 2,3 | 2,2 | 2,3 | 2,3 | 2,3 |
| tert.-Butylperoctoat (g) | 1,5 | 2,3 | 2,2 | 2,3 | 2,3 | 2,3 |
| Isobutanol (g) | 30 | 40 | 40 | 40 | 40 | 40 |
| | | | | | | |
| Mischung 3: | | | | | | |
| Methylmethacrylat (g) | 155 | 140 | 120 | 72,5 | 162,5 | 117,5 |
| n-Butylacrylat (g) | 880 | 790 | 705 | 857,5 | 790 | 790 |
| Diacetonacrylamid (g) | 45 | 45 | 45 | 45 | 22,5 | 67,5 |
| tert.-Butylperbenzoat (g) | 7,5 | 6,7 | 6,8 | 6,7 | 6,7 | 6,7 |
| tert.-Butylperoctoat (g) | 4,5 | 6,7 | 3,8 | 6,7 | 6,7 | 6,7 |
| Isobutanol (g) | 150 | 140 | 140 | 140 | 140 | 140 |
| Adipinsäuredihydrazid (g) | 11,6 | 11,6 | 11,6 | 9,3 | 5,8 | 17,4 |
| | | | | | | |
| Feststoffgehalt der Dispersion (Gew.-%) | 51,2 | 51,9 | 42,3 | 48,9 | 41,5 | 46,8 |
| Isobutanolgehalt (Gew.-%) | 1,8 | 1,8 | 1,1 | 0,9 | 1,4 | 1,9 |
| pH-Wert | 8,3 | 8,1 | 8,2 | 8,2 | 8,4 | 8,3 |
| Viskosität (mPas) | 350 | 420 | 2600 | 120 | 3200 | 1300 |

Prüfung der Dispersionen:

Zur Klebeprüfung wurden die Dispersionen mit einer Trockenschichtdicke von 25 g/m² auf Polyesterfolie 3 Minuten bei 90°C im Trockenschrank getrocknet. Die dabei erhaltenen Klebefilme wurden in 2 cm breite Streifen geschnitten. Zur Bestimmung der Kohäsion wurden die Klebestreifen in 2,5 cm länge auf ein chromiertes (V2A-Prüfblech geklebt, 24 Stunden gelagert und anschließend im Hängen mit einem 1 kg Gewicht belastet. Maßstab der Kohäsion ist die Zeit bis zum Abfallen des Gewichtes. Man verwendete dabei den Durchschnitt aus 5 Messungen. Bei dieser Prüfung soll möglichst die Klebeschicht zerstört werden (Kohäsionsbruch).

Bei der Bestimmung der Schälfestigkeit wurde der Klebstreifen auf einem chromierten Prüfblech in einer Zugdehnungsprüfapparatur bei 23°C im Winkel von 180°C mit einer Geschwindigkeit von 300 mm/ Minute rückwärts abgezogen. Es wurde als Maßstab der Schälfestigkeit die Kraft in N angegeben, die sich als Durchschnittswert aus 5 Prüfungen bei den 2 cm breiten Streifen ergab. Die Klebeschicht soll beim Schältest nicht zerstört werden und sich vollständig vom Substrat ablösen (Adhäsionsbruch).

Für die Bestimmung der Wasserfestigkeit wurde die Dispersion wie oben beschrieben auf eine glasklare Polyesterfolie aufgerakelt und getrocknet. Die Folie wurde im Rahmen eingespannt, der in die wassergefüllte Küvette eines Gerätes zur Bestimmung der Lichtdurchlässigkeit eingetaucht wurde. Sofort nach Eintauchen wurde auf Lichtdurchlässigkeit (=100%) geeicht und dann die zeitabhängige Abnahme der Lichtdurchlässigkeit registriert. Die Prüfwerte für die Beispiele 1 bis 6 sind in der Tabelle 2 zusammengestellt.

Tabelle 2

| | Bei-spiel 1 | Bei-spiel 2 | Bei-spiel 3 | Bei-spiel 4 | Bei-spiel 5 | Bei-spiel 6 |
|---|---|---|---|---|---|---|
| Kohäsion bei 25°C (Stunden) | >120 | >120 | >120 | 9,5 | >120 | 40 |
| Kohäsion bei 50°C (Stunden) | 3 | 13,5 | 21 | 1,4 | >120 | 2,5 |
| Schälfestigkeit (N) | 5,3 | 7,5 | 4,4 | 8,6 | 4,5 | 9,2 |
| Lichtdurchlässigkeit nach 0,5 Stunden (%) | 88 | 98 | 92 | 85 | 96 | 93 |

## Patentansprüche

1. Lagerstabile wäßrige Polymerdispersionen, erhältlich durch Dispergierung eines Gemisches aus 15 bis 70 Gew.-% eines durch Lösungsmittelpolymerisation hergestellten Copolymerisates A aus

(I) 1,5 bis 15 Gew.-% copolymerisierbarer Verbindungen mit 3 bis 10 Kohlenstoffatomen, die eine Carboxyl- oder Carbonsäureanhydridgruppe enthalten,
(II) 65 bis 98,5 Gew.-% $C_1$- bis $C_{20}$-Alkylacrylate oder -methacrylate,
(III) 0 bis 20 Gew.-% Vinylaromaten,
(IV) 0 bis 20 Gew.-% copolymerisierbarer Carbonylverbindungen,
(V) 0 bis 10 Gew.-% weiterer, unter (I) bis (IV) nicht genannter copolymerisierbarer organischer Verbindungen und
30 bis 85 Gew.-% eines durch Lösungsmittelpolymerisation hergestellten Copolymerisates (B) aus
60 bis 100 Gew.-% der Monomeren (II) und
0 bis 40 Gew.-% eines oder mehrerer der Monomeren (III) bis (V)
mit der Maßgabe, daß die Copolymerisate (A) und (B) zusammen mehr als 65 Gew.-% solcher Alkyl-(meth)acrylate (II) als Aufbaukomponente enthalten, deren Homopolymerisate Glastemperaturen unter 0°C aufweisen und daß mindestens eines der Copolymerisate (A) oder (B) die Monomeren (IV) als Aufbaukomponente enthält,
in Wasser unter Zusatz von Ammoniak und einem Polyhydrazid (C).

2. Verfahren zur Herstellung einer wäßrigen Polymerdispersion nach Anspruch 1, dadurch gekennzeichnet, daß in einem organischen Lösungsmittel ein Gemisch aus 15 bis 70 Gew.-% eines Copolymerisates A aus

(I) 1,5 bis 15 Gew.-% copolymerisierbarer Verbindungen mit 3 bis 10 Kohlenstoffatomen, die eine Carboxyl- oder Carbonsäureanhydridgruppe enthalten,
(II) 65 bis 98,5 Gew.-% $C_1$- bis $C_{20}$-Alkylacrylate oder -methacrylate,
(III) 0 bis 20 Gew.-% Vinylaromaten,
(IV) 0 bis 20 Gew.-% copolymerisierbarer Carbonylverbindungen,

(V) 0 bis 10 Gew.-% weiterer, unter (I) bis (IV) nicht genannter copolymerisierbarer organischer Verbindungen und

30 bis 85 Gew.-% eines Copolymerisates (B) aus

60 bis 100 Gew.-% der Monomeren (II) und

0 bis 40 Gew.-% eines oder mehrerer der Monomeren (III) bis (V)

mit der Maßgabe, daß die Copolymerisate (A) und (B) zusammen mehr als 65 Gew.-% solcher Alkyl-(meth)acrylate (II) als Aufbaukomponente enthalten, deren Homopolymerisate Glastemperaturen unter 0°C aufweisen und daß mindestens eines der Copolymerisate (A) oder (B) die Monomeren (IV) als Aufbaukomponente enthält,

in der Weise hergestellt wird, daß zunächst eines der beiden Copolymerisate (A) oder (B) durch Lösungsmittelpolymerisation der Aufbaukomponenten hergestellt wird, in der so entstandenen Polymerlösung das andere Copolymerisat erzeugt wird, die Polymermischung dann unter Zusatz von Ammoniak in Wasser dispergiert wird, gegebenenfalls überschüssiges Lösemittel abdestilliert wird und die Dispersion anschließend mit mindestens einem Polyhydrazid (C) versetzt wird.

3. Polymerdispersionen nach Anspruch 1, erhältlich durch Verwendung von 0,1 bis 1 Äquivalent Polyhydrazid (C) pro Äquivalent Carbonylgruppen im Copolymerisatgemisch (A) und (B).

4. Verwendung der Polymerdispersionen gemäß Anspruch 1 bis 3 als Haftkleber.

5. Verwendung der Polymerdispersionen gemäß Anspruch 1 bis 3 als Klebemittel für Verbundfolien.

**Revendications**

1. Dispersions aqueuses de polymères, stables au stockage, pouvant être obtenues par la mise en dispersion dans l'eau, avec addition d'ammoniac et d'un polyhydrazide (C), d'un mélange de 15 à 70% en poids d'un copolymère (A), préparé par polymérisation en solution de

(I) 1,5 à 15% en poids de composés copolymérisables à 3—10 atomes de carbone qui contiennent un groupement carboxyle ou anhydride d'acide carboxylique,

(II) 65 à 98,5% en poids d'acrylate ou méthacrylate d'alkyle en $C_1$ à $C_{20}$,

(III) 0 à 20% en poids de carbures vinylaromatiques,

(IV) 0 à 20% en poids de composés carbonylés copolymérisables,

(V) 0 à 10% en poids d'autres composés organiques copolymérisables, non mentionnés en (I) à (IV), et de

30 à 85% en poids d'un copolymère (B), préparé par polymérisation en solution de

60 à 100% en poids des monomères (II) et de

0 à 40% en poids de l'un ou de plusieurs des monomères (III) à (V),

étant spécifié que les copolymères (A) et (B) contiennent ensemble, en tant que composant structurel, plus de 65% en poids de (méth)acrylates d'alkyle (II) dont les homopolymères présentent une température de transition vitreuse inférieure à 0°C, et que l'un au moins des copolymères (A) ou (B) contient les monomères (IV) en tant que composant structurel.

2. Procédé de préparation d'un dispersion aqueuse de polymère selon la revendication 1, caractérisé en ce qu'on prépare dans un solvant organique un mélange de 15 à 70% en poids d'un copolymère (A) composé de

(I) 1,5 à 15% en poids de composés copolymérisables à 3—10 atomes de carbone qui contiennent un groupement carboxyle ou anhydride d'acide carboxylique,

(II) 65 à 98,5% en poids d'acrylate ou méthacrylate d'alkyle en $C_1$ à $C_{20}$,

(III) 0 à 20% en poids de carbures vinylaromatiques,

(IV) 0 à 20% en poids de composés carbonylés copolymérisables,

(V) 0 à 10% en poids d'autres composés organiques copolymérisables, non mentionnés en (I) à (IV), et de

30 à 85% en poids d'un copolymère (B) composé de

60 à 100% en poids des monomères (II) et de

0 à 40% en poids de l'un ou de plusieurs des monomères (III) à (V),

étant spécifié que les copolymères (A) et (B) contiennent ensemble, en tant que composant structurel, plus de 65% en poids de (méth)acrylates d'alkyle (II) dont les homopolymères présentent une température de transition vitreuse inférieure à 0°C, et que l'un au moins des copolymères (A) ou (B) contient les monomères (IV) en tant que composant structurel,

de telle manière que l'on prépare d'abord l'un des deux copolymères (A) ou (B) par copolymérisation en solution de ses composants structurels, on produit l'autre copolymère dans la solution de polymère ainsi formée, puis on met en dispersion dans de l'eau le mélange de polymères avec addition d'ammoniac, on chasse éventuellement par distillation le solvant en excès, et on mélange ensuite la dispersion avec au moins un polyhydrazide (C).

3. Dispersions de polymères selon la revendication 1, pouvant être obtenues par utilisation de 0,1 à 1 équivalent de polyhydrazide (C) par équivalent de groupements carbonyle dans le mélange de copolymères (A) et (B).

4. Utilisation des dispersions de polymères selon l'une quelconque des revendications 1 à 3 comme masse auto-adhésive.

5. Utilisation des dispersions de polymères selon l'une quelconque des revendications 1 à 3 comme masse auto-adhésive pour feuilles composites.

**Claims**

1. An aqueous polymer dispersion which has a long shelf life and which is obtainable by dispersing a mixture of

from 15 to 70% by weight of a copolymer (A), prepared by polymerization in solution, of

(I) from 1.5 to 15% by weight of copolymerizable compounds of 3 to 10 carbon atoms which contain a carboxyl or carboxylic anhydride group,

(II) from 65 to 98.5% by weight of $C_1$—$C_{20}$-alkyl acrylates or methacrylates,

(III) from 0 to 20% by weight of vinylaromatics,

(IV) from 0 to 20% by weight of copolymerizable carbonyl compounds and

(V) from 0 to 10% by weight of further copolymerizable organic compounds not stated under (I) to (IV), and

from 30 to 85% by weight of a copolymer (B), prepared by polymerization in solution, of

from 60 to 100% by weight of the monomers (II) and

from 0 to 40% by weight of one or more of the monomers (III) to (V),

with the proviso that the copolymers (A) and (B) together contain, as components, more than 65% by weight of alkyl(meth)acrylates (II) whose homopolymers have glass transition temperatures of less than 0°C, and that one or both of the copolymers (A) and (B) contain the monomers (IV) as components, in water with the addition of ammonia and a polyhydrazide (C).

2. A process for the preparation of an aqueous polymer dispersion as claimed in claim 1, wherein a mixture of from 15 to 70% by weight of a copolymer (A) of

(I) from 1.5 to 15% by weight of copolymerizable compounds of 3 to 10 carbon atoms which contain a carboxyl or carboxylic anhydride group,

(II) from 65 to 98.5% by weight of $C_1$—$C_{20}$-alkyl acrylates or methacrylates,

(III) from 0 to 20% by weight of vinylaromatics,

(IV) from 0 to 20% by weight of copolymerizable carbonyl compounds and

(V) from 0 to 10% by weight of further copolymerizable organic compounds not stated under (I) to (IV), and

from 30 to 85% by weight of a copolymer (B) of

from 60 to 100% by weight of the monomers (II) and

from 0 to 40% by weight of one or more of the monomers (III) to (V),

with the proviso that the copolymers (A) and (B) together contain, as components, more than 65% by weight of alkyl (meth)acrylates (II) whose homopolymers have glass transition temperatures of less than 0°C, and that one or both of the copolymers (A) and (B) contain the monomers (IV) as components,

is prepared in an organic solvent in a manner such that one of the two copolymers (A) or (B) is first prepared by polymerization in solution of the components, the other copolymer is produced in the resulting polymer solution, the polymer mixture is then dispersed in water with the addition of ammonia, excess solvent is distilled off if necessary, and one or more polyhydrazides (C) are then added to the dispersion.

3. A polymer dispersion as claimed in claim 1, obtainable by using from 0.1 to 1 equivalent of polyhydrazide (C) per equivalent of carbonyl groups in the copolymer mixture (A) and (B).

4. Use of a polymer dispersion as claimed in claim 1 or 2 or 3 as a pressure sensitive adhesive.

5. Use of a polymer dispersion as claimed in claim 1 or 2 or 3 as an adhesive for laminated films.